# EUROPÄISCHE PATENTSCHRIFT

(11) **EP 0 438 048 B1**
(45) Veröffentlichungstag und Bekanntmachung des Hinweises auf die Patenterteilung: **18.05.1994**
(21) Anmeldenummer: 91100011.5
(22) Anmeldetag: 02.01.1991
(51) Int. Cl.: A61C 8/00

(54) **Dentalimplantat**
Dental implant
Implant dentaire

(30) Priorität: 15.01.1990 DE 4000914
(43) Veröffentlichungstag der Anmeldung: 24.07.1991
(73) Patentinhaber: Friatec Aktiengesellschaft Keramik- und Kunststoffwerke, D-68229 Mannheim (DE)
(72) Erfinder: Schulte,Willi, Dr.Prof., D-7400 Tübingen (DE); Vizethum, Freimut Dr., D-6830 Schwetzingen (DE); Hund, Walter, D-7602 Oberkirch-Stadelhofen (DE)
(74) Vertreter: Klose, Hans, Dipl.-Phys.

(56) Entgegenhaltungen:
- EP-A- 0 125 203
- EP-A- 0 424 734
- DE-A- 2 628 443
- DE-A- 3 533 395
- GB-A- 2 176 709

## Beschreibung

Die Erfindung bezieht sich auf ein Dentalimplantat gemäß den im Oberbegriff des Patentanspruchs 1 angegebenen Merkmalen.

Aus der DE-A-35 33 395 ist ein derartiges Dentalimplantat bekannt, dessen Primär- oder Pfostenteil eine gestufte zylindrische Außenkontur aufweist. Das Pfostenteil ist in eine korrespondierende gestufte Bohrung mit entsprechend ausgebildeten Bohrungsbereichen einsetzbar. Aufgrund der stufenförmigen Außenkontur des Pfostenteils soll eine möglichst günstige Krafteinleitung in den Kieferknochen erreicht und eine Keilwirkung verhindert werden, welche bei konischen Außenkonturen auftritt. Die Stufen des Pfostenteils weisen eine glatte Außenfläche auf und besitzen in axialer Richtung unterschiedliche Höhen. In einer Ausnehmung im Inneren des Pfostenteils sind Ringnuten mit eingelegten O-Ringen vorgesehen, um für einen eingesetzten Stift des Kopfteiles eine Beweglichkeit zu ermöglichen.

Ferner ist aus DE-A-26 28 443 ein Knochenimplatat aus Keramik bekannt, welches ein Gewinde mit einem zylindrischen Kern aufweist, welches über die gesamte Länge einen gleichbleibenden Außendurchmesser besitzt. Im Gewindebereich sind kreisförmige oder radiale Einschnitte für neues eindringendes Knochengewebe vorgesehen. Dieses Dentalimplantat muß über seine gesamte Länge in eine vorbereitete zylindrische Bohrung des Kieferknochens eingeschraubt werden, und hierbei ist eine Gefährdung infolge der Traumatisierung der Corticalis zu befürchten. Ferner können Schwierigkeiten auftreten, wenn beim Beginn des Einschraubens des Dentalimplantats dessen Achse mit der Achse der vorbereitenden zylindrischen Bohrung des Kieferknochens nicht fluchtet und infolgedessen durch das schräg eingeführte Pfostenteil, und zwar insbesondere dessen apikales Ende, die Bohrungswand und letztendlich der Kieferknochen geschädigt wird.

Ferner ist aus der DE-C-26 19 650 ein Dentalimplantat bekannt, dessen Pfostenteil in apikaler Richtung mehrfach gestuft ausgebildet ist. Die Außenflächen der einzelnen Stufen sind im wesentlichen zylindrisch ausgebildet und enthalten Lakunen, in welchen das Knochengewebe hineinwachsen kann. Das Pfostenteil bildet mit dem Kopfteil eine integrale Einheit, wobei das Kopfteil im Bereich des Schleimhautdurchtritts eine umlaufende Einschnürung aufweist. Nach der Implantation können während der Phase des Einwachsens in den Kieferknochen auf das im Bereich des Schleimhautdurchtritts befindliche Kopfteil unzulässige Kräfte einwirken, wodurch das Anwachsen des Gewebes am Pfostenteil und die Knochenbildung und folglich die Verankerung des Pfostenteils nachteilig beeinträchtigt werden.

Schließlich sei auf die ältere, nicht vorveröffenlichte europäische Patentanmeldung EP-A-424 734 (Stand der Technik gemäß Art. 54(3) EPÜ) verwiesen, welche eine Knockenschraube betrifft. Mittels einer derartigen Knochenschraube können Prothesen an Knochen mit unterschiedlichen Festigkeitsbereichen fixiert werden. Diese Knochenschraube enthält einen mittleren Teil, welcher den Bereich des Knochenmarks durchdringt und mit einem konischen Gewinde versehen ist. Ein apikaler Gewindeteil weist einen zweifachen Gewindegang auf und ist in einen äußeren festen Knochenbereich einzuschrauben. Die in den Knochen einzubringende Bohrung ist entsprechend konisch ausgebildet, zumal für derartige Anwendungsfälle Knochenschrauben mit zylindrischem Gewinde als ungeeignet und nachteilig bezeichnet werden. Im Übergangsbereich des mittleren Gewindeteils zum apikalen Gewindeteil ist der Außendurchmesser der Zahnspitzen der beiden Gewindegänge des apikalen Gewindeteils größer als der Kerndurchmesser des mittleren Gewindeteils.

Desweiteren ist aus der GB-A-21 76 709 ein Dentalimplantat bekannt, denen Pfostenteil eine konische Außenkontur mit einem konischen Gewinde aufweist. Das konische Gewinde erstreckt sich praktisch über die gesamte Länge des Pfostenteils, wobei lediglich am kornalen Ende ein zylindrischer Flansch vorgesehen ist, auf welchem nach der Verbindung mittels einer Schraube das Kopfteil anliegt. Das Pfostenteil muß praktisch über seine gesamte Länge in den Kieferknochen eingeschraubt werden, wobei entsprechend der Steigung des Gewindes eine große Anzahl von Umdrehungen erforderlich ist und eine Traumatisierung des Gewebes des Kieferknochens kaum zu vermeiden ist.

Der Erfindung liegt daher die Aufgabe zugrunde, das Dentalimplantat der eingangs genannten Art dahingehend weiterzubilden, daß eine atraumatische Operationstechnik für eine funktionssichere Verankerung des Zahnersatzes ermöglicht wird. Das Dentalimplantat soll für eine kurze Implantationszeit ausgebildet sein und ferner soll den Anforderungen hinsichtlich Bakteriendichtheit zuverlässig entsprochen werden. Das Dentalimplantat soll eine funktionssichere Konstruktion aufweisen und eine zweckmäßige Handhabung während und nach der Implantation sicherstellen. Die Phase des Einwachsens in den Kiefer soll ungestört von äußeren Einwirkungen erfolgen können und nach der Befestigung des Zahnersatzes sollen nachteilige Spalte und/oder die Schleimhautbildung nachteilig beeinträchtigende Übergänge vermieden werden.

Diese Aufgabe wird gemäß den im Kennzeichen des Patentanspruchs 1 angegebenen Merkmalen gelöst.

Das erfindungsgemäße Dentalimplantat gewährleistet eine funktionssichere Verankerung des Zahnersatzes, wobei wenigstens ein Stufenteil des Pfostenteils ein Gewinde aufweist und das Pfostenteil beim Implantieren bis auf eine Stufenhöhe in den Kieferknochen einsetzbar ist und nachfolgend lediglich um eine Stufenhöhe in den Kieferknochen einzuschrauben ist. Im Gegensatz zu vorbekannten Implantaten, welche über die gesamte Länge des Gewindes eingeschraubt werden, wird eine atraumatische Operationstechnik gewährleistet, da das Einschrauben nur noch über einen Bruchteil der Gesamtlänge des Gewindes bzw. des Pfostenteils zu erfolgen hat. Sind insbesondere vier Stufen vorgesehen, so wird das Pfostenteil bereits auf 3/4 der Gesamtlänge in die Knochenkavität eingesetzt und lediglich nachfolgend um 1/4 eingeschraubt, wodurch in besonders zweckmäßiger Weise eine Traumatisierung der Corticalis durch das Schraubgewinde vermieden wird. Das Schraubgewinde auf wenigstens einem Stufenteil ergibt eine verbesserte Primärstabilität im Vergleich mit solchen Pfostenteilen, welche keine Gewinde aufweisen und lediglich in die Knochenkavität über ihre gesamte Länge eingesetzt werden. Durch die besondere vorgeschlagene Ausbildung wird zudem eine kurze Implantationszeit gewährleistet, zumal durch das Einsetzen des Pfostenteils bereits eine gute Ausrichtung des Pfostenteils bezüglich der Bohrungslängsachse erreicht wird und beim Beginn des Einschraubens die Achse des Pfostenteils mit der Längsachse fluchtet. Zweckmäßig weist das kornale Stufenteil eine zylindrische Außenfläche auf, welche eine dichte Anlage an der Innenwand des Bohrungsteils mit dem größten Durchmesser gewährleistet. Im Bereich des obersten Stufenteils mit dem größten Durchmesser sind in besonders zweckmäßiger Weise keine Gewindegänge bzw. mechanische Retentionen vorhanden, wodurch die perinplantäre Hygiene entscheidened verbessert wird.

Zweckmäßig sind wenigstens zwei, bevorzugt drei, Stufenteile mit Gewindegängen versehen, welche im wesentlichen die gleiche Höhe aufweisen. Das Implantieren und Eindrehen des Pfostenteils wird auf diese Weise wesentlich verbessert. Das Pfostenteil kann nämlich bevor eine Drehbewegung und ein Einschneiden von Gewindegängen erfolgt, in den entsprechend gestuft aufgebohrten Kieferknochen eingesetzt werden, bis praktisch nur noch eine Stufenhöhe zur endgültigen Implantationstiefe fehlt. Nunmehr muß das Pfostenteil nur noch um die eine Stufenhöhe mit den selbstschneidenden Gewindegängen eingedreht und im Kieferknochen verankert werden. Gleichwohl tragen die Gewindegänge aller Stufenteile. Hierbei ergibt sich eine wesentliche Verringerung der Beanspruchung und Belastung des Gewebes im Vergleich zu einem Gewinde mit einem über die Gesamtlänge im wesentlichen gleichen Durchmesser. Sind insbesondere drei Stufenteile vorhanden, wobei die Gewindegänge mit beispielsweise vier Umdrehungen um die Längsachse über die Stufenhöhe einschraubbar sind, so genügen gleichwohl vier Umdrehungen, um insgesamt das Pfostenteil zu verankern. Im Vergleich hierzu müßte ein Pfostenteil ohne Stufen und mit einem über die dreifache Stufenhöhe sich erstreckenden Gewinde konstanten Durchmessers und gleicher Steigung wie bei der gestuften erfindungsgemäßen Ausgestaltung mit insgesamt zwölf Umdrehungen verankert werden. Gleichwohl trägt das erfindungsgemäße Dentalimplantat über die Gesamthöhe der Gewindegänge der vorhandenen Stufenteile. Aufgrund der gestuften Ausbildung des Pfostenteils und der Vorgabe der Gewindeaußendurchmesser der zum apikalen Ende folgenden Stufe gleich oder kleiner als der Außendurchmesser der vorangegangenen Stufe wird in besonders zuverlässiger Weise eine optimale Gewebeschonung erreicht.

In einer zweckmäßigen Ausgestaltung liegt die untere Stirnfläche des Kopfteiles dicht an dem im Knochen verankerten Pfostenteil an, wodurch das Einnisten von Bakterien zuverlässig verhindert wird. Die untere Stirnfläche des Kopfteiles liegt unter axialer Vorspannung an der oberen Gegenfläche des Pfostenteiles an. Das Kopfteil ist ein vorgefertigtes und konfektioniertes, insbesondere aus Metall bestehendes Bauteil. Das Pfostenteil ist zweckmäßig mit Hydroxylapatit beschichtet, während das Kopfteil, insbesondere im Bereich der Stirnfläche und daran angrenzenden Flächen mit einer Keramik-Beschichtung versehen ist. Die Stirnfläche des Kopfteiles ist eine plane zur Längsachse orthogonale Fläche. Die Keramikschicht, welche bekanntlich eine sehr hohe Härte aufweist, kann mit einem vergleichweise geringen Aufwand in der erforderlichen Weise bearbeitet und plan geschliffen werden. Das Kopfteil besteht zweckmäßig aus zwei Teilen, und zwar dem eigentlichen Kronenträger und einem Verbindungselement, das in einer Bohrung des Pfostenteils zu befestigen ist. Hierbei weist der Kronenträger die erwähnte Stirnfläche mit der Keramik-Beschichtung auf, über welche die dichte, spaltfreie Anlage unter Vorspannung an der Gegenfläche des Pfostenteils erfolgt. Da das Kopfteil unmittelbar mit dem Pfostenteil verbunden wird, ist keine Distanzhülse erforderlich. Zwischen dem Kronenträger bzw den Kopfteil und dem Pfostenteil ist nur an einem einzigen Bereich eine Anlage gegeben und zwar zwischen der genannten Stirnfläche und der Gegenfläche des Pfostenteils.

Die Erfindung wird nachfolgend anhand des in der Zeichnung dargestellten Ausführungsbeispiels näher erläutert. Es zeigen:
- Fig. 1: teilweise eine seitliche Ansicht und teilweise einen Schnitt entlang einer axialen Ebene des Dentalimplantats,
- Fig. 2: eine explosionsartige Darstellung des Pfostenteils und des Verbindungselements,
- Fig. 3: eine Darstellung ähnlich Fig. 2, jedoch mit eingesetztem Verbindungselement.

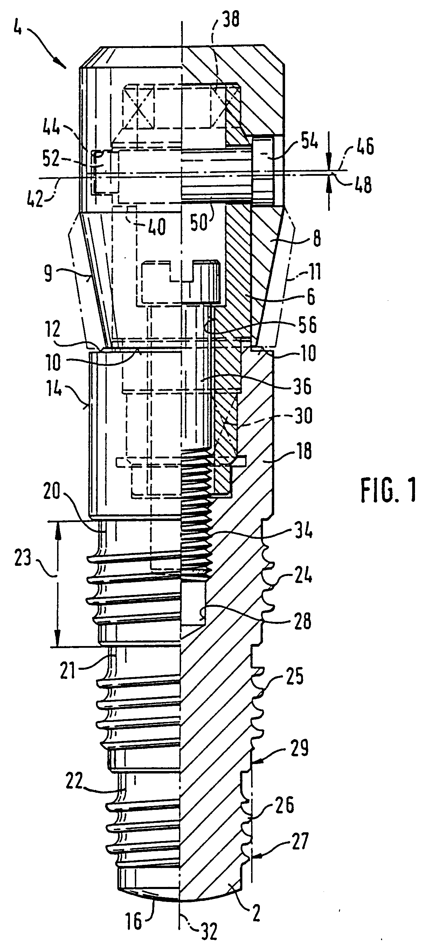

Fig. 1 zeigt teilweise in einer Ansicht und teilweise in einem axialen Längsschnitt das Dentalimplantat mit einem im Kieferknochen verankerbaren Pfostenteil 2 und einem mit diesem verbindbaren Kopfteil 4. Das Kopfteil 4 ist zweiteilig mit einem Verbindungselement 6 und einem Kronenträger 8 ausgebildet. Im Rahmen der Erfindung kann aber das Kopfteil 4 auch einteilig ausgebildet sein. Wichtig ist für alle Ausgestaltungen, daß die untere Stirnfläche 10, welche bei der dargestellten Ausführungsform das untere Ende des Kronenträgers 8 ist, an der Gegenfläche 12 des Pfostenteils 2 dicht und insbesondere unter Vorspannung anliegt. Im übrigen gelten die nachfolgend in Verbindung mit der zweiteiligen Ausführung hinsichtlich der Ausbildung der Stirnfläche 10 des Kronenträgers 8 angegebenen Zusammenhänge und Vorteile in gleicher Weise für ein einteiliges Kopfteil. Das Kopfteil 4, und zwar bei der hier dargestellten zweiteiligen Ausführungsform, dessen topfartiger Kronenträger 8 weist eine sich in Richtung zum Pfostenteil 2 konisch verjüngende Außenfläche 9 auf. Die Stirnfläche 10 ist somit kleiner als bei zylindrischer Ausfgestaltung mit einem Außendurchmesser entsprechend dem des Pfostenteils 2. Aufgrund dieser "Verkleinerung" der Stirnfläche 10 wird deren Bearbeitung und insbesondere das Planschleifen der auf der Stirnfläche 10 angeordneten Keramik-Beschichtung, vereinfacht. Die Stirnfläche 10 und ebenso zumindest ein Teil der in zweckmäßiger Weise konisch ausgebildeten Außenfläche 9 ist mit dieser Oxidkeramikbeschichtung versehen, die eine Schichtstärke von einigen Mikrometern bis Millimetern aufweist. Die derart beschichtete Stirnfläche 10 bildet die einzige Paßfläche des Kopfteiles 4 zum Pfostenteil 2 und kann mit sehr hoher Präzision plan geschliffen und/oder poliert werden.

Die Keramikbeschichtung 11 der Außenfläche 9 kann zweckmäßig eine vergleichsweise große Schichtstärke aufweisen, wie es durch die strichpunktierten Linien angedeutet ist. Die Schichtstärke ist in zweckmäßiger Weise derart vorgegeben, daß im Bereich der Stirnfläche 10 im wesentlichen der gleiche Außendurchmesser vorhanden ist, wie bei der Gegenfläche 12 des Pfostenteils 2 bzw. dessen Stufenteiles 18. Es ist damit in zweckmäßiger Weise ein kontinuierlicher Übergang vom Kopfteil 4 zum Pfostenteil 2 geschaffen. Bei derart großen Schichtstärken der Beschichtung 11 kann im Rahmen der Erfindung auch das dem Pfostenteil zugekehrte Ende des Kronenträgers 8 zur Gegenfläche 12 einen vorgegebenen Abstand aufweisen, denn die Stirnfläche 10 ist nunmehr Bestandteil der Keramik-Beschichtung 11. Bei der vergleichsweise großen Schichtstärke der Beschichtung 11 geht der Kraftfluß von dem Kronenträger 8 über die Beschichtung 11, über deren Stirnfläche auf die Gegenfläche 12 des Pfostenteils 2. Die Beschichtung 11 ist Bestandteil des Kofpteiles 4 und unabhängig von der Vorgabe der Schichtdicke der Beschichtung erfolgt die Vorspannung über die Stirnfläche 10.

Das Pfostenteil 2 besteht aus Metall, und zwar insbesondere aus Titan oder einer Titanlegierung, wobei die Gegenfläche 12 und/oder die Außenfläche 14 mit einer biokompatiblen Beschichtung, insbesondere aus Hydroxylapatit, versehen ist. Das Pfostenteil 2 weist eine gestufte Außenkontur auf, wobei die Durchmesser in Richtung zum apikalen Ende 16 der einzelnen Stufenteile abnimmt. Das dem Kopfteil 4 zugekehrte koronale Stufenteil 18 weist eine zylindrische Außenfläche auf, während die drei anderen Stufenteile 20 bis 22 selbstschneidende Gewinde 24 bis 26 zum Einschneiden und Eindrehen in den Kieferknochen aufweisen. Die drei mit den Gewindegängen versehenen Stufenteile 20, 21, 22 weisen jeweils im wesentlichen die gleiche Höhe 23 auf. Von besonderer Bedeutung ist, daß das selbstschneidende Gewinde 26 des dem apikalen Ende 16 zugekehrten Stufenteils 22 einen Außendurchmesser 27 aufweist, der höchstens gleich groß ist wie der Kerndurchmesser 29 des zum Kopfteil 4 zugewandten Stufenteils 21; entsprechendes gilt auch für die Gewinde 25 und 24 bezüglich der Kerndurchmesser der entsprechend zum Kopfteil hin anschließenden Stufenteile 20 und 18. Allgemein gilt erfindungsgemäß, daß der Gewindeaußendurchmesser einer Stufe kleiner oder gleich dem Kerndurchmesser der nächstgrößeren Stufe ist. Auf diese Weise wird gewährleistet, daß das Dentalimplantat in das gleichfalls gestuft gefräste Bett im Kieferknochen derart eingesetzt werden kann, daß es nachfolgend nur noch um eine Stufenhöhe eingeschraubt werden muß. Gleichwohl wird ein optimaler und vollständiger Sitz über die gesamte Höhe sämtlicher, im vorliegenden Falle drei, Stufen sichergestellt. Es versteht sich, daß das Bett im Kieferknochen in der Weise gestuft gefräst wurde, damit das Dentalimplantat soweit in das vorbereitete Bett eingesetzt werden kann, daß nur noch um eine einzige Stufenhöhe eingeschraubt werden muß. Es hat sich darüber hinaus als besonders zweckmäßig erwiesen, das dem Kopfteil 4 benachbarte Stufenteil 18 mit einer im wesentlichen zylindrischen Außenfläche 14 zu versehen, deren Außen- bzw. Kerndurchmesser zumindest gleich groß ist wie der Außendurchmesser des zum apikalen Ende 16 anschließenden Stufenteils 20.

Die Gewinde 24 bis 26 der drei Stufenteile 20 bis 22 weisen bei unterschiedlichen Durchmessern die gleiche Steigung auf. Die Kerne der Gewinde weisen über die gesamte Stufenhöhe jeweils einen gleichbleibenden Durchmesser auf und die bei konischen Gewinden und/oder Pfostenteilen sich ergebenden Schwierigkeiten werden vermieden. Es sei ausdrücklich festgehalten, daß bei mehreren mit Gewinde versehenen Stufenteilen, diese im wesentlichen die gleiche axiale Höhe aufweisen. Grundsätzlich genügt im Rahmen dieser Erfindung die Ausbildung nur eines einzigen Stufenteiles mit einem Gewinde, wobei zumindest das dem Kopfteil 4 zugekehrte koronale Stufenteil, welches den größten Durchmesser aufweist, im Hinblick auf die perimplantäre Hygiene kein Gewinde enthält. Grundsätzlich kann das Pfostenteil somit am apikalen Ende ein erstes Gewinde aufweisen, an welches das zweite Stufenteil mit im wesentlichen glatter Außenfläche anschließt; diese beiden Stufenteile erstrecken sich folglich jeweils im wesentlichen über die Hälfte der Gesamtlänge des Pfostenteiles. Auch Ausführungsformen mit zwei mit Gewinde versehenen Stufenteilen liegen im Rahmen dieser Erfindung. Die dargestellte Ausführungsform, deren drei Stufenteile jeweils mit Gewinden versehen sind, hat sich als besonders zweckmäßig erwiesen. Bei dieser Ausführungsform sind pro Stufenteil jeweils zumindest näherungsweise drei Gewindegänge vorgesehen, so daß zum Einschrauben lediglich drei Drehungen erforderlich sind. Da der Pfostenteil bis auf eine Stufenhöhe in die gestuft ausgebildete Bohrung in den Kieferknochen eingesetzt wird und lediglich über eine einzige Stufenhöhe mittels drei Drehungen eingeschraubt wird, wird die Operationszeit minimiert, ohne daß hierbei eine Traumatisiserung der Corticalis durch das Schraubgewinde zu befürchten wäre.

Eine im Inneren des Pfostenteils 2 vorhandene Ausnehmung 28 weist einen Bereich 30 auf, der als Sechskant mit ebenen Flächen ausgebildet ist. Dieser Bereich 30 dient zum Einsetzen eines Werkzeuges, insbesondere eines Imbus-Schlüssels, um zum Implantieren des Pfostenteils 2 ein Drehmoment um die Längsachse 32 ausüben zu können. Selbstverständlich kann dieser Bereich 30 auch zum Einsetzen anderer Werkzeuge ausgebildet sein, um das Pfostenteil 2 in den Kiefer einsetzen und entsprechend der Gewindehöhe eines einzigen Stufenteils in das entsprechend aufgefräste Bett einschrauben zu können.

In Richtung zum apikalen Ende 16 enthält die Ausnehmung 28 ein Innengewinde 34, welches ein Gewinde mit einem geringeren Durchmesser als der genannte Bereich 30 aufweist, wobei das Innengewinde 34 zweckmäßig auch in einem axialen Abstand zu dem Bereich 30 angeordnet ist. Somit wird eine Beschädigung des Innengewinde4s 34 durch ein für den Bereich 30 vorgesehenes Werkzeug zuverlässig ausgeschlossen.

Das Verbindungselement 6 ist mittels einer Schraube 36, deren apikales Ende in das Innengewinde 34 des Pfostenteils 2 eingreift, mit diesem fest verbunden. Unmittelbar nach dem Implantieren wird die Ausnehmung 28 zweckmäßig mit einer hier nicht weiter dargestellten Schraube oder dergleichen verschlossen, welche nach erfolgtem Einwachsen des Pfostenteils in den Kiefer und Öffnen der über die Gegenfläche 12 gewachsenen Schleimhaut wieder entfernt wird, um das Verbindungselement 6 in der dargestellten Weise in die Ausnehmung 28 einzuführen und mittels der Schraube 36 zu verbinden. Damit beim Einschrauben der Schraube 36 kein unzulässiges Drehmoment auf das Pfostenteil 2 ausgeübt wird, weist das verbindungselement 6 wenigstens eine plane Außenfläche auf, die an einer Seitenfläche des Bereiches 30 anliegt und folglich eine Drehsicherung bildet. Das Verbindungselement 6 weist an seinem okklusalen Ende einen Haltebereich 38 auf, welcher insbesondere als Sechskant ausgebildet ist. Mittels eines entsprechenden Werkzeuges, beispielsweise eines Sechskantschraubenschlüssels, kann über die plane Außenfläche des Verbindungselements und den Bereich 30 das Pfostenteil 2 gegen eine unbeabsichtigte Drehung gesichert und festgehalten werden, so daß beim Einschrauben der Schraube 36 keine Lockerung des Pfostenteils 2 befürchtet werden muß.

Das Verbindungselement 6 enthält ferner eine orthogonal zur Längsachse 32 ausgerichtete Querbohrung 40 mit der Querachse 42. Wie dargestellt, ist der Kronenträger 8 topfartig mit einer zum apikalen Ende 16 weisenden Öffnung ausgebildet, wobei das verbindungselement 6 in den inneren Hohlraum des kronenträgers 8 eingreift. Der Kronenträger 8 enthält eine gleichfalls orthogonal zur Längsachse 32 angeordnete Bohrung 44, deren Achse 46 exzentrisch versetzt zur Querachse 42 liegt. In der dargestellten Position befindet sich die Achse 46 in einem kleinen Abstand 48 in Richtung zum koronalen Ende versetzt bezüglich der Querachse 42. In der Querbohrung 40 ist ein Exzenterbolzen 50 angeordnet, welcher einen in die Blindbohrung 44 eingreifenden exzentrisch angeordneten Zapfen 52 sowie einen entsprechend exzentrisch angeordneten Kopf 54 aufweist, welcher in einer zur Blindbohrung 44 koaxialen Durchgangsbohrung 56 liegt.

Durch Drehen des Zapfens, und zwar an dem Kopf 54, welcher einen Schlitz oder dergleichen für einen Schraubenzieher enthält, wird der Exzenterbolzen 50 gedreht, wobei die Achse 46 aus der dargestellten Position in Richtung zum apikalen Ende 16 hin wandert. Hierbei wird auch der Kronenträger 8 in Richtung zum apikalen Ende 16 derart bewegt, daß die Stirnfläche 10 des Kronenträgers 8 unter Vorspannung an der Gegenfläche 12 des Pfostenteils 2 anliegt. Es ist folglich kein Spalt zwischen der mit einer Schicht aus Keramik versehenen Stirnfläche 10 und der Gegenfläche 12 des Pfostenteils 2 vorhanden. Es ist damit eine bakteriendichte Verbindung zwischen dem Kopfteil 4 und dem Pfostenteil 2 mit hoher Sicherheit gewährleistet. Die Exzentrizität des Zapfens 52 und Kopfes 54 sowie die Durchmesser der zugeordneten Bohrungen 44 werden mit hoher Präzision vorgegeben, wobei ferner auch der Abstand der Exzenterachse 46 zur Stirnfläche 10 definiert vorgegeben ist. Entsprechendes gilt ferner für den axialen Abstand der Querbohrung 40 sowie der Querachse 42 zur Gegenfläche 12 des Pfostenteils 2. Es wird folglich erfindungsgemäß durch Drehen des Exzenterbolzens 50 eine exakte axiale Vorspannung von Kronenträger 8 und Pfostenteil 2 vorgegeben.

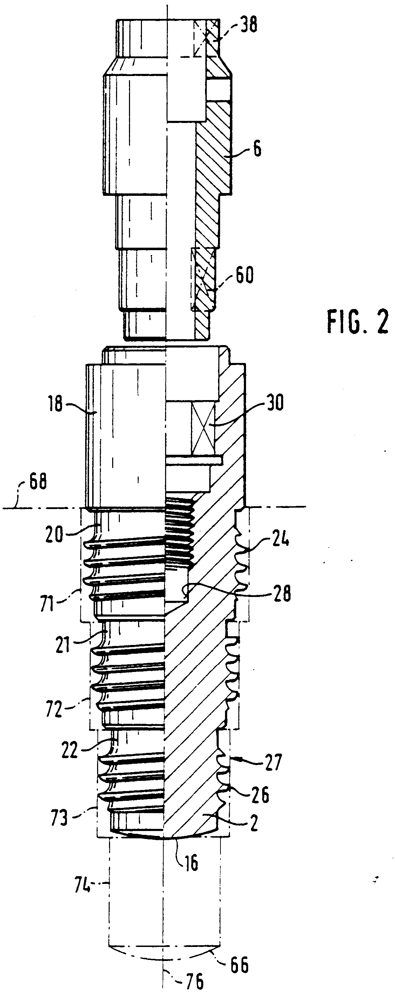

Fig. 2 zeigt in einer explosionsartigen Darstellung das Verbindungselement 6 und das Pfostenteil 2. Es ist nunmehr die plane Außenfläche 16 des Verbindungselements 6 zu erkennen. Ist das Verbindungselement 6 in die Bohrung 20 eingesetzt, so ist durch das Zusammenwirken der Außenfläche 60 mit den Seitenflächen des Sechskant-Bereiches 30 eine Drehsicherung des Verbindungselement 6 bezüglich des Pfostenteils 2 gewährleistet. Mit den strichpunktierten Linien ist die gestufte Bohrung 66 im Kieferknochen angedeutet, dessen oberer Rand 68 gleichfalls strichpunktiert angedeutet ist. Das Pfostenteil 2 ist in der Position dargestellt, in welcher es bis auf eine einzige Stufenhöhe bereits in den Kieferknochen eingesetzt ist. Wie ersichtlich, weist die Bohrung 66 vier gestufte Bereiche 71 bis 74 auf, deren Durchmesser zumindest jeweils gleich groß ist wie der Außendurchmesser des Gewindes des Stufenteiles, welches in den nächstfolgenden gestuften Bereich eingeschraubt wird. Das Pfostenteil ist bereits über 3/4 seiner Gesamtlänge in die gestufte Bohrung 66 eingesetzt, wobei bereits eine exakte Ausrichtung bezüglich der Längsachse 76 der Bohrung 66 erfolgt ist. Das nachfolgende Einschrauben über nur noch eine Stufenhöhe kann ohne besondere Schwierigkeiten und ohne besondere Führungsmaßnahmen für das Pfostenteil zuverlässig durchgeführt werden.

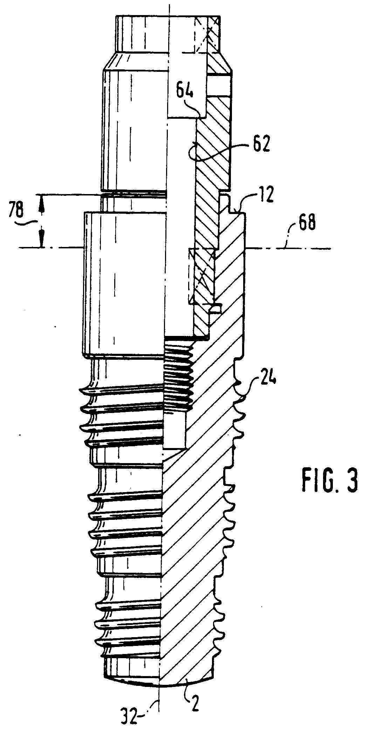

Gemäß Fig. 3 ist in die Sackbohrung 28 des Pfostenteils 2 das Verbindungselement 6 eingesetzt, wobei hier die Längsbohrung 62 für die Schraube zur Verbindung mit dem Pfostenteil 2 gut zu erkennen ist. Diese Längsbohrung 62 weist eine Ringschulter 64 zur Anlage des Kopfes der Verbindungsschraube auf, welche mit ihrem Außengewinde in das Innengewinde 34 des Pfostenteils 2 einschraubbar ist. Mittels der strichpunktierten Linie ist der obere Rand 60 des Kieferknochens angedeutet. Das Stufenteil 18 und somit das obere Ende des Pfostenteils 2 ragt in der Höhe 78 über die Oberkante 68 hinaus. Die Gegenfläche 12 des Pfostenteils 2 liegt folglich ebenso wie das oben erläuterte Kopfteil im Schleimhautbereich.

### Bezugszeichen

- 2: Pfostenteil
- 4: Kopfteil
- 6: Verbindungselement
- 8: Kronenträger
- 9: Außenfläche
- 10: Stirnfläche von 4
- 11: Beschichtung
- 12: Gegenfläche von 2
- 14: Außenfläche von 2
- 16: apikales Ende
- 18: Stufenteil
- 20 bis 22: Stufenteil
- 23: Höhe
- 24 bis 26: Gewindegang
- 27: Außendurchmesser
- 28: Ausnehmung
- 29: Kerndurchmesser
- 30: erweiterter Bereich
- 32: Längsachse
- 34: Innengewinde
- 36: Schraube
- 38: Haltebereich
- 40: Querbohrung
- 42: Querachse
- 44: Blindbohrung
- 46: Achse von 44
- 48: Abstand
- 50: Exzenterbolzen
- 52: Zapfen von 50
- 54: Kopf von 50
- 56: Durchgangsbohrung
- 60: plane Außenfläche
- 62: Längsbohrung in 6
- 64: Ringschulter von 62
- 66: Bohrung
- 68: oberer Rand
- 71 bis 74: gestufter Bereich
- 76: Längsachse von 66

## Patentansprüche

1. Dentalimplantat mit einem im Kiefer verankerbaren Pfostenteil (2), welches am koronalen Ende eine Ausnehmung (28) zur Befestigung eines Kopfteils (4) eines Zahnersatzes aufweist und welches in eine gestufte Bohrung (71 bis 74) des Kieferknochens einsetzbar ist, wobei die Außenfläche des Pfostenteils (2) zu einem apikalen Ende (16) gestuft ausgebildet ist und wenigstens zwei im wesentlichen zylindrische Stufenteile (18, 20 bis 22) aufweist, von welchen das dem apikalen Ende (16) näherliegende den kleineren Außendurchmesser aufweist,
dadurch gekennzeichnet, daß von zwei der benachbarten Stufenteile (21, 22) das dem apikalen Ende (16) näherliegende Stufenteil (22) ein Gewinde (26) mit einem Außendurchmesser (27) aufweist, welcher im wesentlichen gleich oder kleiner ist als der Kerndurchmesser (29) des dem Kopfteil (4) näherliegenden Stufenteils (21),
und daß die Stufenteile (20, 21, 22) im wesentlichen die gleiche Höhe aufweisen.

2. Dentalimplantat nach Anspruch 1, dadurch gekennzeichnet, daß das dem Kopfteil (4) benachbarte koronale Stufenteil (18) eine im wesentlichen zylindrische Außenfläche (14) mit einem Außendurchmesser aufweist, der im wesentlichen gleich oder größer ist als der Gewindeaußendurchmesser des in Richtung zum apikalen Ende (16) anschließenden Stufenteils (20).

3. Dentalimplantat nach Anspruch 1 oder 2, dadurch gekennzeichnet, daß das zur Aufnahme des Zahnersatzes vorgesehenes Kopfteil (4) eine Stirnfläche (10) aufweist, welche an einer Gegenfläche (12) des Pfostenteils (2) dicht anliegt und daß das Kopfteil (4) eine im Bereich des Schleimhautdurchtritts befindliche Außenfläche (9) aufweist.

4. Dentalimplantat nach einem der Ansprüche 1 bis 3, dadurch gekennzeichnet, daß die Stirnfläche (10) des Kopfteils (4) mit einer Keramik-Schicht versehen ist, welche plan geschliffen und/oder poliert ist.

5. Dentalimplantat nach einem der Ansprüche 1 bis 4, dadurch gekennzeichnet, daß zumindest ein Teil der an die Stirnfläche (10) des Kopfteils (4) anschließenden Außenfläche (9) gleichfalls mit einer Keramik-Beschichtung (11) versehen ist, welche bevorzugt die Stirnfläche (10) aufweist.

6. Dentalimplantat nach einem der Ansprüche 1 bis 5, dadurch gekennzeichnet, daß das Kopfteil (4) einen topfartig ausgebildeten Kronenträger (8) und ein Verbindungselement (6) zum Befestigen in der Ausnehmung (28) des Pfostenteils (2) aufweist.

7. Dentalimplantat, insbesondere nach einem der Ansprüche 1 bis 6, dadurch gekennzeichnet, daß das Kopfteil (4) und insbesondere dessen Kronenträger (8) unter axialer Vorspannung mit seiner Stirnfläche (10) an der Gegenfläche (12) des Pfostenteils (2) anliegt.

8. Dentalimplantat nach einem der Ansprüche 1 bis 7, dadurch gekennzeichnet, daß in einer Querbohrung (40) des Verbindungselements (6) ein Exzenterbolzen (50) angeordnet ist, mittels welchem der Kronenträger (8) axial bezüglich des Pfostenteils (2) vorspannbar ist.

9. Dentalimplantat nach einem der Ansprüche 1 bis 8, dadurch gekennzeichnet, daß der an die Gegenfläche (12) anschließende Stufenteil (18) eine zylindrische Außenfläche aufweist und die insbesondere drei zum apikalen Ende (16) anschließenden Stufenteile (20 bis 22) die Gewindegänge (24 bis 26) aufweisen.

10. Dentalimplantat nach einem der Ansprüche 1 bis 9, dadurch gekennzeichnet, daß das Verbindungselement (6) zur Drehsicherung bezüglich des Pfostenteils (2) insbesondere eine plane Außenfläche (60) aufweist, welcher in der Bohrung (28), und zwar in einem Bereich (30) eine entsprechende Fläche zugeordnet ist.

11. Dentalimplantat nach einem der Ansprüche 1 bis 10, dadurch gekennzeichnet, daß das Verbindungselement (6) eine durchgehende Längsbohrung (62) für eine Schraube (36) aufweist, deren Kopf an einer Ringschulter (64) des Verbindungselements (6) anliegt und deren Spitze in ein Innengewinde (34) des Pfostenteils (2) eingreift.

12. Dentalimplantat nach einem der Ansprüche 1 bis 11, dadurch gekennzeichnet, daß die Außenfläche (14) des Pfostenteils (2), insbesondere dessen Stufenteils (18), im Bereich der Gegenfläche (12) im wesentlichen den gleichen Außendurchmesser aufweist wie die Stirnfläche (10) mit der Beschichtung (11).

## Claims

1. Dental implant with a post part (2) anchorable in the jawbone, which post part is provided at the crown end with a recess (28) for securing a head part (4) of a replacement tooth and which can be inserted in a stepped bore (71-74) of the jawbone, the outer surface of the post part (2) being stepped towards an apical end (16) and being provided with at least two essentially cylindrical step parts (18, 20-22) of which that nearest the apical end (16) has the smaller outer diameter, characterised in that of two adjacent step parts (21,22), that step part (22) lying closer to the apical end (16) has a thread (26) with an outer diameter (27) which is essentially the same or smaller as the core diameter (29) of the step part (21) lying closer to the head part (4), and in that the step parts (20,21,22) have essentially the same length.

2. Dental implant as claimed in 1, characterised in that the crown step part (18) adjacent the head part (4) has an essentially cylindrical outer surface (14) with an outer diameter which is essentially the same or greater than the thread outer diameter of the next step part (20) in the direction of the apical end (16).

3. Dental implant as claimed in claim 1 or 2, characterised in that the head part (4) provided to receive the replacement tooth has a bottom face (10) which lies tightly on the bearing surface (12) of the post part (2), and in that the head part (4) has an outer surface (9) in the region where it emerges from the mucous membrane.

4. Dental implant as claimed in one of claims 1 to 3, characterised in that the bottom face (10) of the head part (4) is provided with a ceramic coating, which is ground flat and/or polished.

5. Dental implant as claimed in one of claims 1 to 4, characterised in that at least part of the outer surface (9) which contacts the bottom face (10) of the head part (4) is also provided with a ceramic coating (11) which the bottom face (10) preferably has.

6. Dental implant as claimed in one of claims 1 to 5, characterised in that the head part (4) comprises a pot-like crown support (8) and a coupling element (6) for fixing in the recess (28) of the post part (2).

7. Dental implant, in particular as claimed in one of claims 1 to 6, characterised in that the head part (4) and particularly the crown support (8) thereof contacts the bearing surface (12) of the post part (2) through its bottom face (10) under axial bias.

8. Dental implant as claimed in one of claims 1 to 7, characterised in that an eccentric pin (50) is arranged in a transverse bore (40) of the coupling element (6), by means of which the crown support (8) can be axially tensioned relative to the post part (2).

9. Dental implant as claimed in one of claims 1 to 8, characterised in that the step part (18) adjacent to the bearing surface (12) has a cylindrical outer surface and the, in particular three, step parts (20-22) extending towards the apical end (16) have the screw threads (24-26).

10. Dental implant as claimed in one of claims 1 to 9, characterised in that the coupling element (6) is provided in particular with a flat outer surface (60) for rotational locking relative to the post part (2), which surface matches a corresponding surface in the bore (28), in particular in a region (30).

11. Dental implant as claimed in one of claims 1 to 10, characterised in that the coupling element (6) has a through bore (62) for a screw (36), the head of which lies on an annular shoulder (64) of the coupling element (6) and the point of which engages in an internal thread (34) of the post part (2).

12. Dental implant as claimed in one of claims 1 to 11, characterised in that the outer surface (14) of the post part (2), in particular the step parts (18) thereof, have essentially the same outer diameter in the region of the bearing surface (12) as the bottom face (10) with the coating (11).

## Revendications

1. Implant dentaire comprenant une partie pivot (2) pouvant être ancrée dans le maxillaire, qui présente, à l'extrémité coronale, un évidement (28) pour la fixation d'une partie tête (4) d'une prothèse dentaire, et qui peut être encastrée dans un perçage étagé (71 à 74) du maxillaire, la surface extérieure de la partie pivot (2) étant de forme étagée vers une extrémité apicale (16) et présentant au moins deux étages sensiblement cylindriques (18, 20 à 22) dont celui qui est proche de l'extrémité apicale (16) présente le plus petit diamètre extérieur,
***caractérisé en ce que***, parmi deux des étages adjacents (21, 22), l'étage (22) proche de l'extrémité apicale (16) présente un filetage (26) d'un diamètre extérieur (27) qui est sensiblement égal ou inférieur au diamètre de noyau (29) de l'étage (21) proche de la partie tête (4), ***et*** ***en ce que*** les étages (20, 21, 22) présentent sensiblement la même hauteur.

2. Implant dentaire selon la Revendication 1, ***caractérisé en ce que*** l'étage coronal (18) voisin de la partie tête présente une surface extérieure (14) sensiblement cylindrique, d'un diamètre extérieur qui est sensiblement égal ou supérieur au diamètre extérieur du filetage de l'étage (20) qui y fait suite en direction de l'extrémité apicale (16).

3. Implant dentaire selon la Revendication 1 ou 2, ***caractérisé en ce*** ***que*** la partie tête (4) prévue pour recevoir la prothèse dentaire présente une surface frontale (10) qui est étroitement appuyée contre une surface conjuguée (12) de la partie pivot (2) et en ce que la partie tête (4) présente une surface extérieure (9) qui se trouve dans la région de la traversée de la muqueuse.

4. Implant dentaire selon une des Revendications 1 à 3, ***caractérisé*** ***en ce que*** la surface frontale (10) de la partie tête (4) est munie d'une couche de céramique qui est rectifiée à une forme plane et/ou polie.

5. Implant dentaire selon une des Revendications 1 à 4, ***caractérisé*** ***en ce qu'***au moins une partie de la surface extérieure (9) qui fait suite à la surface frontale (10) de la partie tête (4) est également munie d'un revêtement de céramique (11) qui présente de préférence la surface frontale (10).

6. Implant dentaire selon une des Revendications 1 à 5, ***caractérisé*** ***en ce que*** la partie tête (4) présente un support de couronne (8) en forme de godet et présente un élément de liaison (6) destiné à être fixé dans l'évidement (28) de la partie pivot (2).

7. Implant dentaire, notamment selon une des Revendications 1 à 6, ***caractérisé en ce que*** la partie tête (4), notamment son support de couronne (8), est appliquée par sa surface frontale (10) contre la surface conjuguée (12) de la partie pivot (2) avec précontrainte axiale.

8. Implant dentaire selon une des Revendications 1 à 7, ***caractérisé*** ***en ce que***, dans un perçage transversal (40) de l'élément de liaison (6), est disposée une goupille excentrique (50) au moyen de laquelle le support de couronne (8) peut être précontraint par rapport à la partie pivot (2).

9. Implant dentaire selon une des Revendications 1 à 8, *c****aractérisé*** ***en ce que*** l'étage (18) qui fait suite à la surface conjuguée (12) présente une surface extérieure cylindrique et les étages (20 à 22), en particulier au nombre de trois, qui y font suite en direction de l'extrémité apicale (16) présentent les filetages (24 à 26).

10. Implant dentaire selon une des Revendications 1 à 9, ***caractérisé*** ***en ce que*** l'élément de liaison (6) présente, pour le blocage en rotation par rapport à la partie pivot (2), en particulier une surface extérieure plane (60) à laquelle une surface correspondante est associée, dans le perçage (28), et plus précisément dans une région (30).

11. Implant dentaire selon une des Revendications 1 à 10, ***caractérisé en ce que*** l'élément de liaison (6) présente un perçage longitudinal traversant (62) pour recevoir une vis (36) dont la tête s'appuie contre un épaulement annulaire (64) de l'élément de liaison (6) et dont la pointe est vissée dans un filetage intérieur (34) de la partie pivot (2).

12. Implant dentaire selon une des Revendications 1 à 11, ***caractérisé en ce que***, dans la région de la surface conjuguée (10), la surface extérieure (14) de la partie pivot (2), notamment de l'étage (18) de celle-ci, présente sensiblement le même diamètre extérieur que la surface frontale (10) munie du revêtement (11).
